# EUROPÄISCHE PATENTANMELDUNG

(11) **EP 1 650 557 A1**
(43) Veröffentlichungstag der Anmeldung: **26.04.2006**
(21) Anmeldenummer: 04024883.3
(22) Anmeldetag: 20.10.2004
(51) Int. Cl.: G01N 23/18

(54) **Röntgenprüfverfahren und Röntgenprüfvorrichtung für Reifen**

(71) Anmelder: Collmann GmbH & Co. Spezialmaschinenbau KG, 23558 Lübeck (DE)
(72) Erfinder: Kaczorowski, Richard, 22145 Braak (DE)
(74) Vertreter: Hemmer, Arnd

(57) **Zusammenfassung**

Die Erfindung betrifft ein Röntgenprüfverfahren für Reifen (12), bei welchem der Reifen (12) zum Positionieren vertikal stehend von zwei entgegengesetzten Seiten an seinem Innenumfang ergriffen wird. Anschließend wird der Reifen (12) vertikal nach oben zu einer oberhalb des Reifens (12) angeordneten Detektoreinrichtung (14) bewegt, bis die Lauffläche (30) des Reifens (12) einen vorbestimmten vertikalen Abstand (D) zu der Detektoreinrichtung (14) erreicht hat. Ferner betrifft die Erfindung eine Röntgenprüfvorrichtung zur Ausführung dieses Verfahrens.

## Beschreibung

Die Erfindung betrifft ein Röntgenprüfverfahren für Reifen und eine entsprechende Röntgenprüfvorrichtung für Reifen, insbesondere für große Fahrzeugreifen.

In der Reifenfertigung ist es üblich, Fahrzeugreifen einer Röntgenprüfung zu unterziehen, um die richtige Lage der Gewebe- und Stahleinlagen im Inneren des Reifens zu überprüfen. Bei Großreifen, wie sie beispielsweise bei Baumaschinen zum Einsatz kommen, wird die Prüfung meist in einer Anordnung vorgenommen, in welcher der Reifen vertikal stehend gehalten wird, d. h. die Mittel- bzw. Drehachse des Reifens erstreckt sich in horizontaler Richtung. Zur Röntgenprüfung ist es erforderlich, dass der Reifen relativ zu einer Röntgenröhre und einer Detektoreinrichtung in eine definierte Position gebracht wird, so dass die Reifenlauffläche und die Reifenflanken durchleuchtet und das Bild von der Detektoreinrichtung erfasst werden kann. Da häufig in einer Prüfanlage verschieden große Reifen geprüft werden sollen, ist es dazu erforderlich, den Reifen entsprechend zu positionieren.

Bei bekannten Vorrichtungen wird der Reifen dazu von einem sich horizontal erstreckenden Trägerelement aufgenommen, welches von einer Seite des Reifens in das Innere des Reifens eingeführt wird und sich durch das Innere des Reifens bis zu der entgegengesetzten Reifenflanke erstreckt, so dass beide Reifenflanken auf dem Trägerelement aufliegen. Diese Anordnung hat den Nachteil, dass die Positionierung derRöntgenröhre im Inneren des Reifens aufgrund des sich durch den Reifen erstreckenden Trägerelementes schwierig ist.

US 3,843,888 offenbart ein Verfahren und eine Vorrichtung zur Reifenprüfung mittels Röntgenstrahlen. Dabei wird im Inneren des Reifens eine Röntgenstrahlquelle angeordnet und das erzeugte Bild wird von einem Bilderfassungssystem, welches außerhalb des Reifens in einer horizontalen Ebene mit der Röntgenröhre angeordnet ist, erfasst. Die Reifenzufuhr erfolgt derart, dass der stehende Reifen zunächst zwischen zwei Trageinrichtungen aufgenommen wird und diese dann in einer Richtung parallel zur Drehachse des Reifens horizontal in die Prüfposition verfahren werden. In dieser Prüfposition wird dann die Röntgenstrahlquelle im Inneren des Reifens positioniert. Ferner kann das Bilderfassungssystem in horizontaler Richtung in einer Richtung normal zur Verfahrrichtung der Trageinrichtungen im gewünschten Abstand zu dem Reifen positioniert werden. Diese Anordnung hat den Nachteil, dass verschiedene Verfahrbewegungen in den unterschiedlichen horizontalen Richtungen erforderlich sind. Ferner ist es erforderlich, sowohl die Röntgenstrahlquelle im Inneren des Reifens zu positionieren als auch das Bilderfassungssystem relativ zum Reifen im gewünschten Abstand zu positionieren. Dies führt zu längeren Prüfzyklen, da die Positionierung unterschiedlich großer Reifen recht umständlich ist.

Es ist daher Aufgabe der Erfindung, ein Röntgenprüfverfahren sowie eine Röntgenprüfvorrichtung bereitzustellen, welche eine einfache Positionierung unterschiedlich großer Reifen und eine einfache Positionierung einer Röntgenstrahlquelle im Inneren des Reifens ermöglichen.

Diese Aufgabe wird durch ein Röntgenprüfverfahren mit den im Anspruch 1 angegebenen Merkmalen sowie durch eine Röntgenprüfvorrichtung mit den im Anspruch 7 angegebenen Merkmalen gelöst. Bevorzugte Ausführungsformen ergeben sich aus den Unteransprüchen, der Beschreibung sowie den Figuren.

Gemäß dem erfindungsgemäßen Röntgenprüfverfahren wird der Reifen so positioniert, dass er in einer vertikal stehenden Position, d. h. die Rotations- bzw. Mittelachse des Reifens erstreckt sich horizontal, ergriffen wird. Dabei wird der Reifen von zwei entgegengesetzten Seiten, d. h. von den Seiten der beiden entgegengesetzten Reifenflanken her von außen ergriffen, wobei der Reifen am Innenumfang der Reifenflanken ergriffen wird. Dies hat den Vorteil, dass sich kein Tragelement durch den Reifen hindurch von der einen Reifenflanke zur anderen Reifenflanke erstrecken muss und der Innenraum des Reifens frei bleiben kann, so dass eine Röntgenröhre frei im Inneren des Reifenwulstes positioniert und der Reifen störungsfrei durchleuchtet werden kann. Ferner kann der Reifen durch Ergreifen an beiden Reifenflanken von zwei Seiten her leicht gespreizt werden, indem die Reifenflanken auseinander bewegt werden.

Zur Röntgenprüfung des Reifens ist ferner eine Detektoreinrichtung vorgesehen, welche gemäß dem erfindungsgemäßen Verfahren oberhalb des zugeführten Reifens angeordnet ist. Der Reifen wird daher nach dem Ergreifen zunächst vertikal nach oben auf die Detektoreinrichtung zu bewegt, bis die Lauffläche des Reifens einen vordefinierten Abstand in vertikaler Richtung zu der Detektoreinrichtung erreicht hat. Wenn die Lauffläche des Reifens diese vorbestimmte Position erreicht hat, wird die Vertikalbewegung des Reifens gestoppt. Durch das vertikale Bewegen des Reifens ist es leicht möglich, unterschiedlich große Reifen, d. h. Reifen mit unterschiedlich großen Durchmessern und/oder unterschiedlich großen Flankenhöhen in einem vorbestimmten Abstand der Lauffläche zu der Detektoreinrichtung zu positionieren. Je nach Reifengröße und Flankenhöhe wird der Reifen unterschiedlich weit in vertikaler Richtung nach oben bewegt, bis die Lauffläche in definierter Lage zu der Detektoreinrichtung ist. Eine zusätzliche Positionierung der Detektoreinrichtung ist nicht mehr erforderlich, die relative Positionierung des Reifens zu der Detektoreinrichtung wird direkt im Verfahrensschritt des Anhebens des Reifens erreicht, welches auch dazu erforderlich ist, dass der Reifen frei drehbar gehalten wird, so dass er während der Röntgenprüfung zumindest einmal vollständig gedreht werden kann und über seinen ganzen Umfang durchleuchtet werden kann.

Vorzugsweise wird, nachdem der Reifen den vorbestimmten Abstand der Lauffläche zu der Detektoreinrichtung erreicht hat, eine Röntgenstrahlquelle von einer Seite des Reifens, d. h. von der Seite einer Reifenflanke her, in horizontaler Richtung in das Innere des Reifens bewegt. Dabei wird die Röntgenstrahlquelle vorzugsweise in die Mittelebene des Reifens, d. h. in einer Position bewegt, in welcher sie von beiden Reifenflanken in horizontaler Richtung gleich weit beabstandet ist. Dies ermöglicht eine gleichmäßige Durchstrahlung des Reifens. Da der Reifen von zwei Seiten her gegriffen und gehalten wird und sich die Trag- bzw. Halteelemente für den Reifen nicht in dessen Inneren befinden, kann die Röntgenröhre erfindungsgemäß im Inneren des Reifens frei positioniert werden.

Nachdem die Röntgenstrahlquelle in horizontaler Richtung in das Innere des Reifens bewegt worden ist, wird sie vorzugsweise zusätzlich in vertikaler Richtung in eine Position mit einem vorbestimmten vertikalen Abstand zu der Detektoreinrichtung bewegt. D. h. die Röntgenstrahlquelle kann nach dem horizontalen Positionieren vertikal in das Innere des Reifenwulstes hinein bewegt werden und somit in eine Position näher zu der Lauffläche des Reifens und Detektoreinrichtung bewegt werden. Die Röntgenstrahlquelle ist dann in der Prüfposition vorzugsweise zwischen den Reifenflanken angeordnet, so dass sie vorzugsweise von den Reifenflanken und der Reifenlauffläche gleich weit beabstandet ist, um eine gleichmäßige Durchleuchtung sowohl der Lauffläche als auch der Reifenflanken zu erreichen. Da das Innere des Reifens, d. h. der Raum zwischen den Reifenflanken frei von Trag- oder Greifeinrichtungen zum Greifen oder Halten des Reifens ist, ist es gemäß dem erfindungsgemäßen Verfahren problemlos möglich, die Röntgenstrahlquelle in vertikaler Richtung in den Zwischenraum zwischen den Reifenflanken hineinzubewegen.

Vorzugsweise wird der Reifen zumindest von einer Seite her mit zwei horizontal und im Wesentlichen in einer Richtung parallel zu einer Flanke des Reifens voneinander beabstandeten Greifelementen ergriffen. Diese Anordnung hat zum einen den Vorteil, dass der Reifen relativ sicher gegriffen und gehalten werden kann, ohne dass der Reifen auf der Halte- bzw. Greifeinrichtung unerwünscht schwingen oder pendeln kann.

Zum anderen hat die beabstandete Anordnung der beiden Greifelemente den Vorteil, dass es möglich ist, die Röntgenstrahlquelle in horizontaler Richtung zwischen den zwei Greifelementen anzuordnen. D. h. eine Zustelleinrichtung für die Röntgenröhre kann zwischen den beiden Greifelementen angeordnet sein, um die Röntgenstrahlquelle in horizontaler Richtung zwischen den beiden Greifelementen in das Innere des Reifens zuzuführen und dort ggf. noch in vertikaler Richtung zuzustellen. Die Anordnung ermöglicht somit die größtmögliche Freiheit bei der Positionierung der Röntgenstrahlquelle im Inneren des Reifens, was insbesondere dann von Vorteil ist, wenn Reifen unterschiedlicher Größe geprüft werden sollen und die Röntgenstrahlröhre auch bei unterschiedlichen Flankenhöhen in einen bestimmten Abstand zur Lauffläche des Reifens gebracht werden soll.

Weiter bevorzugt wird der Reifen während der Röntgenprüfung durch zumindest eines der Greifelemente in Rotation versetzt. Dazu kann eines der Greifelemente mit einer Rolle versehen oder als Rolle ausgebildet sein, welche angetrieben wird und mit dem Innenumfang der Reifenflanke in Eingriff ist, so dass der Reifen durch die Rolle in Rotation versetzt wird. Dazu sind vorzugsweise alle Greifelemente als Rollen ausgebildet, so dass der Reifen leicht auf ihnen abrollen und sich bei der Röntgenprüfung drehen kann. Alternativ kann der Reifen auch anders angetrieben werden, beispielsweise über eine an der Reifenflanke oder der Lauffläche angreifende Rolle oder ein zusätzliches Antriebselement, welches am Innenumfang der Reifenflanke angreift.

Die Erfindung betrifft ferner eine Röntgenprüfvorrichtung für Reifen, mittels welcher das zuvor beschriebene Verfahren ausgeführt werden kann. Die Röntgenprüfvorrichtung weist eine Detektoreinrichtung auf, welche oberhalb einer Zuführebene, in welcher die zu prüfenden Reifen der Röntgenprüfvorrichtung zugeführt werden, angeordnet ist. Die zu prüfenden Reifen werden vertikal stehend zugeführt, wobei es möglich ist, die Reifen zunächst liegend zu transportieren und dann mittels einer Kippeinrichtung in die vertikale Position zu bringen, in welcher sich die Reifenmittelebene vertikal erstreckt und die Rotations- bzw. Mittelachse des Reifens horizontal verläuft. Die Detektoreinrichtung ist oberhalb des vertikal stehend zugeführten Reifens angeordnet, so dass dieser in vertikaler Richtung angehoben werden kann, um relativ zu der Detektoreinrichtung in eine vorbestimmte Prüfposition verbracht zu werden. In dieser angehobenen Position ist der Reifen für die Röntgenprüfung frei drehbar, so dass durch Drehung des Reifens die gesamte Reifenlauffläche bzw. Reifenflanke mittels der Detektoreinrichtung untersucht werden kann. Zum Anheben des Reifens ist erfindungsgemäße eine Lifteinrichtung vorgesehen. Zum Greifen bzw. Halten des Reifens sind zwei einander gegenüberliegende Greifeinrichtungen vorgesehen, welche so weit voneinander beabstandet sind, dass der Reifen zwischen ihnen angeordnet werden kann und die Greifeinrichtungen jeweils eine Reifenflanke an deren Innenumfang ergreifen können. So ist es möglich, dass der Reifen von zwei Seiten her ergriffen wird, ohne dass sich eine Greif- oder Trageinrichtung durch das Innere des Reifens von einer Reifenflanke zur anderen erstrecken muss. So wird der Innenraum des Reifens freigehalten, um eine Röntgenstrahlquelle im Inneren des Reifens frei positionieren zu können. Die Greifeinrichtungen sind zum Greifen des Reifens zweckmäßiger Weise horizontal bewegbar. So können verschieden breite Reifen gegriffen und ferner die gegriffenen Reifen durch Auseinanderbewegen der Greifeinrichtungen gespreizt werden. Die Greifeinrichtungen sind an der Lifteinrichtung angeordnet, so dass nach dem Ergreifen des Reifens durch die Greifeinrichtungen der gesamte Reifen mittels der Lifteinrichtung angehoben und in eine vorbestimmte Position zu der Detektoreinrichtung bewegt werden kann. In dieser vorbestimmten Position haben die Lauffläche des Reifens und/oder die Reifenflanken vorzugsweise einen vorbestimmten Abstand zu der Detektoreinrichtung.

Ferner ist in der Röntgenprüfvorrichtung vorzugsweise eine Röntgenstrahlquelle vorgesehen, welche in horizontaler Richtung in das Innere eines zu prüfenden Reifens verfahrbar ist. D. h. die Röntgenstrahlquelle ist an einer Zustelleinrichtung angeordnet, mittels welcher sie von einer Seite horizontal in das Reifeninnere bewegt werden kann, so dass sie vorzugsweise in horizontaler Richtung mittig zwischen den beiden Reifenflanken angeordnet ist. Da der Innenraum des Reifens von Trageinrichtungen freigehalten ist, kann eine so angeordnete Röntgenstrahlquelle die Reifenlauffläche und die angrenzenden Reifenflanken störungsfrei durchstrahlen.

Die Detektoreinrichtung ist vorzugsweise an einer festen, vertikalen Position angeordnet, so dass die Detektoreinrichtung nicht einzeln zugestellt werden muss. Die Zustellung des Reifens und dessen vorbestimmte Position relativ zu der Detektoreinrichtung erfolgt in vertikaler Richtung allein durch die Lifteinrichtung. Die Detektoreinrichtung kann allerdings so ausgebildet sein, dass nur eine Detektorzeile vorgesehen ist, welche, je nachdem, welche Reifenflanke oder Lauffläche des Reifens untersucht werden soll, so verschwenkt wird, dass sie parallel zu der zu untersuchenden Reifenflanke oder der zu untersuchenden Lauffläche angeordnet ist. Alternativ kann eine u-förmige Detektorzeile angeordnet werden, welche gleichzeitig beide Reifenflanken und die dazwischen liegende Lauffläche erfasst.

Die Röntgenstrahlquelle ist vorzugsweise an einer Zustelleinrichtung befestigt, welche relativ zu der Detektoreinrichtung ortsfest angeordnet ist. D. h. zunächst wird der zu prüfende Reifen durch die Lifteinrichtung in die Prüfposition gebracht, und anschließend wird die Röntgenstrahlquelle in das Innere des Reifens zugestellt. Dies ermöglicht, dass die Röntgenstrahlquelle nicht mit der Lifteinrichtung mitbewegt werden muss, sondern deren Zustelleinrichtung wie die Detektoreinrichtung ortsfest angeordnet sein kann, so dass die Bewegungen der Röntgenstrahlquelle minimiert werden und so die Zeit zur Positionierung des Reifens und der Röntgenstrahlquelle minimiert werden kann.

Die Zustelleinrichtung für die Röntgenstrahlquelle ist vorzugsweise so ausgebildet, dass die Röntgenstrahlquelle sowohl in horizontaler und vorzugsweise auch in vertikaler Richtung zustellbar ist. Dies ermöglicht, die Röntgenstrahlquelle, nachdem der Reifen durch die Lifteinrichtung in seine Prüfposition bewegt worden ist, zunächst horizontal in das Innere des Reifens zu bewegen, so dass die Röntgenstrahlquelle vorzugsweise horizontal gleich weit von den beiden Reifenflanken beabstandet im Inneren des Reifens angeordnet ist. Weiter bevorzugt ist anschließend noch eine vertikale Zustellung der Röntgenstrahlquelle möglich, um die Röntgenstrahlquelle in den Reifenwulst hineinzubewegen, so dass sie in vertikaler Richtung in einen vorbestimmten Abstand zu der Reifenlauffläche und/oder der Detektoreinrichtung gebracht wird. So kann die Röntgenstrahlquelle auch bei Reifen mit unterschiedlicher Flankenhöhe stets im günstigsten Abstand zur Lauffläche positioniert werden, um diese durchleuchten zu können.

Von den Greifeinrichtungen weist vorzugsweise zumindest eine zwei horizontal und im Wesentlichen in einer Richtung parallel zu einer Flanke des zu greifenden Reifens voneinander beabstandete Greifelemente auf. Weiter bevorzugt weisen beide, an entgegengesetzten Seiten des Reifens angreifende Greifeinrichtungen jeweils zwei entsprechend voneinander beabstandete Greifelemente auf. In dem Fall, dass die Greifeinrichtung zwei Greifelemente aufweist, wird der Reifen an der jeweiligen Reifenflanke somit an zwei Punkten ergriffen, so dass eine stabile Lagerung und Spreizung des Reifens in der Prüfposition möglich ist. Ein weiterer Vorteil der voneinander beabstandeten Greifelemente ist der, dass zwischen den Greifelementen ein Freiraum verbleibt, welcher ein einfacheres Zustellen der Röntgenstrahlquelle ermöglicht.

Bevorzugt ist jede der Greifeinrichtungen an einem vertikal bewegbaren Tragelement angeordnet, wobei beide Tragelemente relativ zu der Detektoreinrichtung in vertikaler Richtung synchron bewegbar sind. Die synchrone Bewegung ist wichtig, um den Reifen stets in vertikaler Ausrichtung zu halten, d. h. in einer Position, in welcher die oben gelegene Reifenlauffläche in Richtung zwischen den Reifenflanken horizontal verläuft. Die Tragelemente sind vorzugsweise seitlich des Reifens angeordnet, so dass der Bereich oberhalb des Scheitelbereiches des Reifens frei bleibt, so dass dieser Bereich gut von der Detektoreinrichtung in der Prüfposition erfasst werden kann, um ein Röntgenbild des Reifens in diesem Bereich aufzunehmen. Die vertikale Bewegung der Tragelemente kann durch verschiedene Antriebs- und Führungsmittel erreicht werden. Beispielsweise können Gewindespindeln, Riementriebe oder auch pneumatische oder hydraulische Antriebe verwendet werden. Die synchrone Bewegung der beiden Tragelemente kann entweder durch eine mechanische Verbindung der Tragelemente, durch eine mechanische Kopplung der Antriebseinrichtungen oder durch synchrone Steuerung der Antriebe erfolgen. Die Greifeinrichtungen bzw. Greifelemente sind an den Tragelementen vorzugsweise mit Zustelleinrichtungen befestigt.

Das bedeutet, die beiden einander gegenüberliegenden Greifeinrichtungen oder deren Greifelemente zum Greifen des Reifens sind horizontal aufeinander zu- und voneinander wegbewegbar, um den Reifen zu greifen oder nach der Prüfung wieder loszulassen. Zur Aufnahme des Reifens werden die Greifeinrichtungen bzw. Greifelemente in eine Position gebracht, in welcher sie die zugewandte Reifenflanke jeweils untergreifen und so den Reifen anheben können. Wenn der Reifen wieder vertikal nach unten aus der Prüfposition bewegt worden ist, können die Greifeinrichtungen bzw. Greifelemente wieder horizontal zurückbewegt werden, so dass der Reifen freigegeben wird. Ferner können die Greifeinrichtungen oder Greifelemente auch nach dem Greifen des Reifens um ein bestimmtes Maß auseinander bewegt werden, um die Reifenflanken auseinander zu bewegen bzw. den Reifen zu spreizen. Der Linearantrieb der Greifeinrichtungen bzw. Greifelemente kann ebenfalls verschiedenartig in bekannter Weise realisiert werden, beispielsweise hydraulisch, pneumatisch oder durch Spindelantriebe.

Vorzugsweise weist zumindest eine Greifeinrichtung oder zumindest ein Greifelement eine antreibbare Rolle zur Rotation eines von den Greifeinrichtungen bzw. Greifelementen gegriffenen Reifens auf. Zweckmäßigerweise weisen alle Greifelemente oder Greifeinrichtungen Rollen auf, so dass sich der Reifen auf ihnen frei drehen kann. Der Antrieb kann über eine der Rollen oder mehrere der Rollen erfolgen. Alternativ kann ein zusätzlicher Antrieb, beispielsweise in Form einer antreibbaren Rolle an der Lauffläche des Reifens vorgesehen sein. Allerdings hat der Antrieb eines der Greifelemente bzw. einer der Greifeinrichtungen den Vorteil, dass auch bei unterschiedlichen Reifengrößen eine Antriebseinrichtung nicht extra an den Reifen zugestellt werden muss, sondern dass das Antriebsmittel automatisch mit Ergreifen des Reifens an diesem anliegt.

Nachfolgend wird die Erfindung beispielhaft anhand der beigefügten Figuren beschrieben. In diesen zeigt:
- Fig. 1: schematisch eine erfindungsgemäße Röntgenprüfvorrichtung für Reifen vor Aufnahme des Reifens,
- Fig. 2: die Röntgenprüfvorrichtung gemäß Fig. 1 mit ergriffenem Reifen,
- Fig. 3: die Röntgenprüfvorrichtung gemäß Figuren 1 und 3, bei welcher sich der Reifen in der Prüfposition befindet,
- Fig. 4: eine Schnittansicht der Röntgenprüfvorrichtung gemäß Fig. 3 mit dem in der Prüfposition angeordneten Reifen und
- Fig. 5: eine perspektivische Detailansicht der Röntgenprüfvorrichtung gemäß Figuren 1 bis 4, bei welcher sich der Reifen in der Prüfposition befindet.

Die Reifenprüfvorrichtung weist ein Traggestell 2 auf, welches im gezeigten Beispiel aus vier Pfosten 4 besteht, von denen jeweils zwei seitlich eines aufzunehmenden Reifens angeordnete Pfosten 4 oben durch einen Querträger 6 verbunden sind. Die Querträger 6 wiederum sind über eine Verbindungsbrücke 8 miteinander verbunden.

Das Traggestell 2 kann auch in anderer Weise ausgebildet sein, wesentlich ist, dass ein zentraler Aufnahmeraum 10 gebildet wird, in dem der zu prüfende Reifen 12 angeordnet und in vertikaler Richtung X bewegt werden kann.

An der Verbindungsbrücke 8 ist ferner in vertikal fester Position ein Detektor 14 angebracht. Der Detektor 14 ist u-förmig ausgebildet, wobei sich seine freien Schenkel vertikal nach unten und der die freien Schenkel verbindende Verbindungsschenkel horizontal parallel zu der Verbindungsbrücke 8 erstreckt. Die u-förmige Ausgestaltung des Detektors 14 ermöglicht, bei der Röntgenprüfung gleichzeitig die beiden Reifenflanken und die Lauffläche zu durchleuchten und zu betrachten.

An jedem der Pfosten 4 ist eine sich vertikal erstreckende Linearführung 16 angeordnet. Auf jeweils zwei der Linearführungen 16, welche an den durch die Querträger 6 paarweise verbundenen Pfosten 4 angeordnet sind, ist ein vertikal verfahrbares Trägerelement 18 angeordnet. Die beiden Trägerelemente 18 sind somit jeweils an einer von zwei einander gegenüberliegenden Seiten des Aufnahmeraumes 10 angeordnet und erstrecken sich parallel zueinander. Die Trägerelemente 18 sind in vertikaler Richtung auf den Linearführungen 16 bewegbar. Dazu kann in den Linearführungen 16 oder den Trägerelementen 18 ein entsprechender Verfahrantrieb vorgesehen sein. Dieser kann verschiedenartig ausgebildet sein und wird hier nicht näher beschrieben. Denkbar sind z. B. elektrische, pneumatische oder hydraulische Antriebe. Beispielsweise können auch Spindel- oder Riementriebe vorgesehen sein. Die Antriebe sind mechanisch oder steuerungstechnisch so miteinander gekoppelt, dass die Trägerelemente 18 synchron vertikal bewegbar sind, so dass die beiden Trägerelemente 18 sich stets in einer horizontalen Ebene befinden.

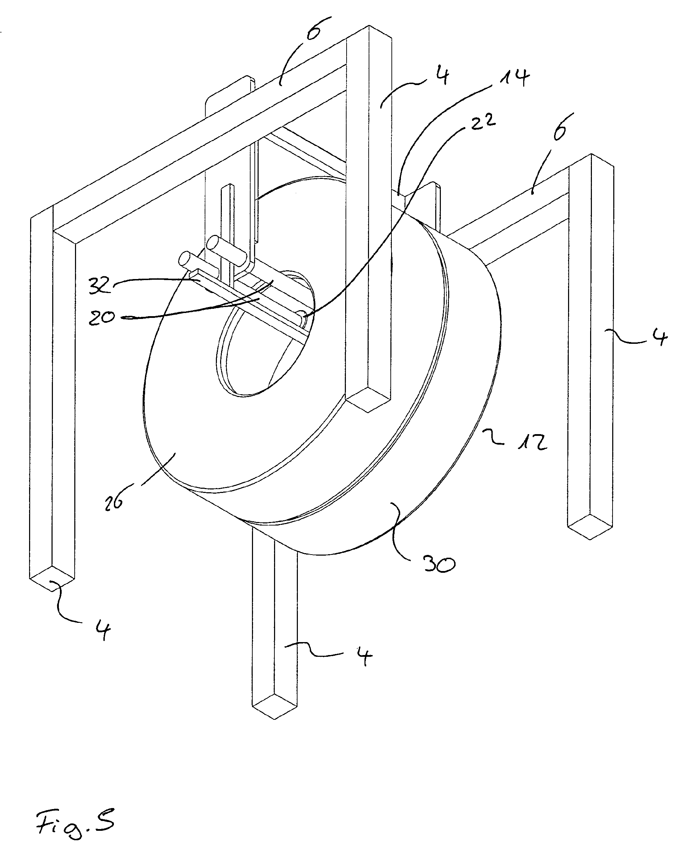

An jedem der Trägerelemente 18 sind zwei Greifelemente 20 angeordnet, welche Greifeinrichtungen zum Ergreifen des Reifens 12 bilden. Die Greifelemente 20 sind in horizontaler Richtung, d. h. normal zu der Achse X linear bewegbar. Dies kann durch einen nicht näher gezeigten elektrischen, pneumatischen oder hydraulischen Antrieb erfolgen. Beispielsweise können auch hier Spindelantriebe oder pneumatische Antriebe vorgesehen sein. Die Greifelemente sind als Rollen ausgebildet, so dass sich der Reifen, wenn er auf ihnen angeordnet ist, drehen kann. Ferner weisen die Greifelemente 20 an ihren den Reifen zugewandten Stirnenden sich radial nach außen erstreckende Anlageschultern 22 (siehe Fig. 5) auf. Die Greifelemente 20 können gemeinsam mit den Trägerelementen 18 linear in Richtung der Achse X nach oben und unten bewegt werden.

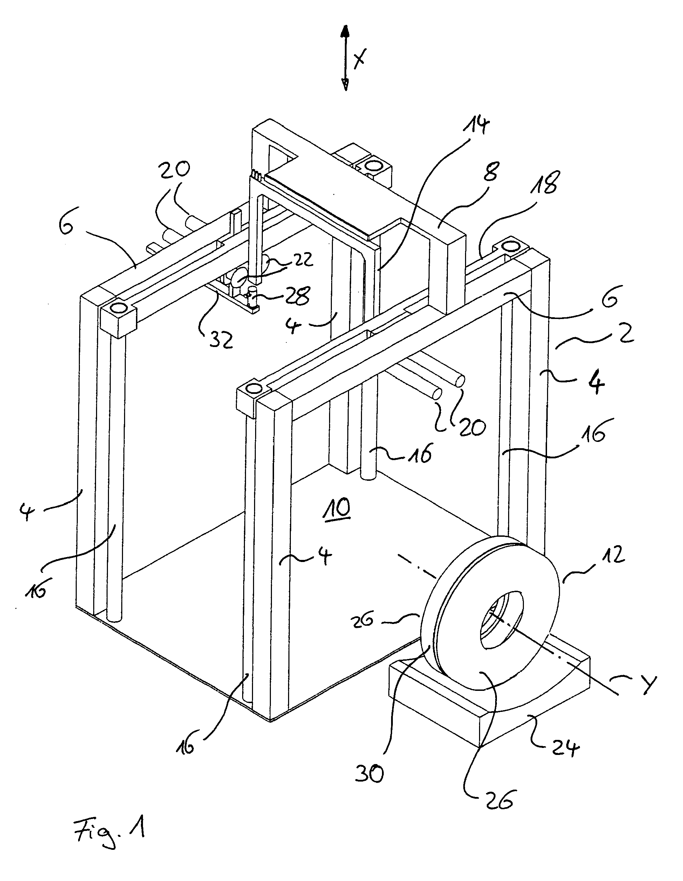

Nachfolgend wird der Vorgang der Reifenaufnahme und Positionierung des Reifens 12 relativ zu dem Detektor 14 anhand der Figuren 1 bis 4 schrittweise beschrieben.

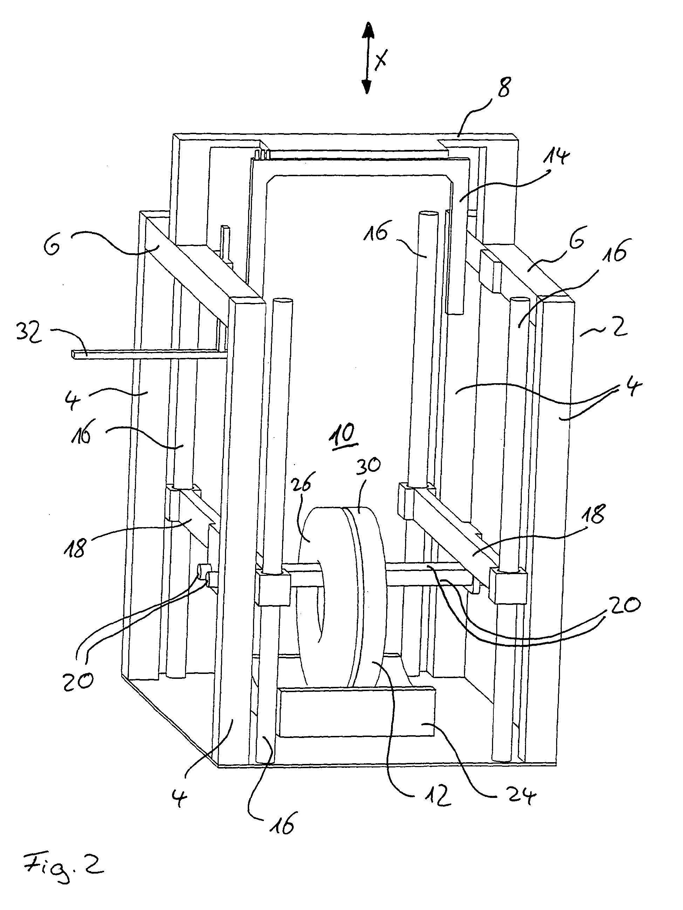

Die zu prüfenden Reifen 12 werden zunächst außerhalb der Röntgenprüfvorrichtung aufrecht stehend auf einer Transporteinrichtung 24, beispielsweise einem Transportwagen, angeordnet. Auf der Transporteinrichtung 24 steht der Reifen 12 auf seiner Lauffläche, so dass die Reifenflanken im Wesentlichen in sich vertikal erstreckenden Ebenen liegen und die Reifenmittel- bzw. Drehachse Y sich horizontal erstreckt. Die Anordnung auf der Transporteinrichtung 24 erfolgt vorzugsweise außerhalb eines Strahlenschutzraumes, in welchem die beschriebene Röntgenprüfvorrichtung angeordnet ist. Anschließend wird die Transporteinrichtung 24 mit dem Reifen 12 in den Aufnahmeraum 10 zwischen den Pfosten 4 bewegt. Dies kann durch einen der Freiräume zwischen den Pfosten 4 geschehen. Dabei wird der Reifen möglichst zentral zwischen den Pfosten 4 und insbesondere in horizontaler Richtung zwischen den Trägerelementen 18 angeordnet. Die Trägerelemente 18 werden, wie in Fig. 2 gezeigt, in der Richtung X so weit nach unten bewegt, dass die Greifelemente 20 in horizontaler Richtung in den Reifen bewegt werden können, so dass sie in den Innenumfang der Reifenflanken 26 eingreifen. Anschließend wird das Trägerelement 18 in Richtung X vertikal nach oben auf den Detektor 14 zu bewegt. Dabei kommen die Greifelemente 20 oben am Innenumfang der Reifenflanken 26 zur Anlage, so dass der Reifen 12 mit angehoben wird.

Nach Anheben des Reifens 12 werden die Greifelemente 20 in horizontaler Richtung vom Reifen aus gesehen nach außen bewegt, so dass die Anlageschultern 22 an den einander zugewandten Innenseiten der Reifenflanken 26 zur Anlage kommen. Dadurch kann der Reifen gespreizt werden, so dass die Reifenflanken 26 im Bereich ihres Innenumfanges auseinander gezogen werden. Dies dient dazu, die Reifenflanken in eine zum Durchleuchten günstige Position, vorzugsweise in eine im Wesentlichen parallele Anordnung zu den vertikalen Schenkeln des Detektors 14 zu bringen. Ferner wird das Einsetzen der Röntgenstrahlquelle 28 erleichtert.

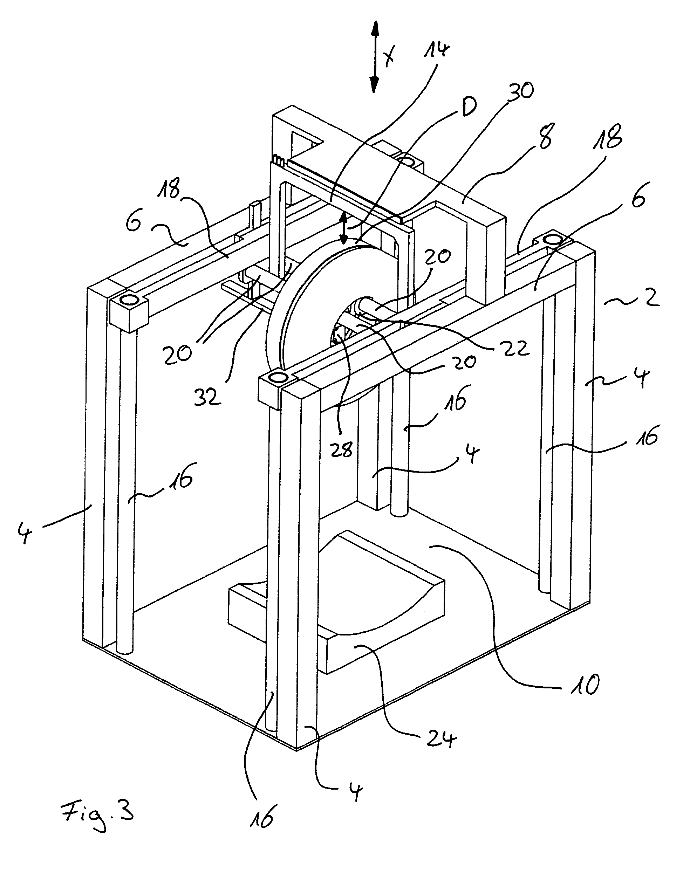

Der Reifen 12 wird durch die Trägerelemente 18 so weit vertikal nach oben bewegt, dass die Lauffläche 30 des Reifens 12 einen vorbestimmten Abstand D zu dem horizontalen Bereich des Detektors 14 einnimmt, wie in Fig. 3 gezeigt.

In dieser Stellung kann die Röntgenstrahlquelle 28 in das Innere des Reifens 12 bewegt werden. Die Röntgenstrahlquelle 28 ist mit einer Zustelleinrichtung 32 an einem der Querträger 6 festgelegt. Die Röntgenstrahlquelle 28 wird über die Zustelleinrichtung 32 zunächst horizontal, d. h. parallel zur Reifenmittel- bzw. -drehachse Y in das Innere des Reifens bewegt, bis die Röntgenstrahlquelle 28 sich in der Mittelebene des Reifens, d. h. gleich weit beabstandet von beiden Reifenflanken 26 befindet. Anschließend kann die Röntgenstrahlquelle 28 durch die Zustelleinrichtung 32 in vertikaler Richtung in Richtung der Achse X nach oben bewegt werden, so dass sie in den Innenraum des Reifenwulstes zwischen den beiden Reifenflanken 26 eintritt und vorzugsweise sowohl von den horizontalen als auch den vertikalen Schenkeln des Detektors 14 im Wesentlichen gleich weit beabstandet ist, so dass die Reifenflanken 26 und die Lauffläche 30 gleichzeitig im vom Detektor 14 erfassten Röntgenbild betrachtet werden können.

Dadurch, dass der Reifen 12 von den Greifelementen 20 von zwei Seiten her gegriffen wird, bleibt der Innenraum des Reifens zwischen den Reifenflanken 26 weitgehend frei von Halteelementen, so dass die Röntgenstrahlquelle 28 in diesem Raum optimal positioniert werden kann. Ferner hat das Greifen des Reifens von zwei Seiten den Vorteil, dass der Abstand zwischen der zu greifenden Reifenflanke 26 und dem Trägerelement 28 klein und somit das Greifelement 20 mit kurzer Hebellänge ausgebildet werden kann, so dass die Durchbiegung der Trag- bzw. Greifelemente, welche den Reifen 12 halten und anheben, minimiert werden kann.

Um den Reifen während der Röntgenprüfung zumindest einmal um 360° um seine Mittelachse Y drehen zu können, ist zumindest eines der Greifelemente 20 mit einem Antrieb versehen. Dazu ist eine am freien Ende des Greifelementes 20 ausgebildete Rolle, auf welcher der Innenumfang der Reifenflanke 26 aufliegt, vorzugsweise mit einem elektrischen Antrieb versehen sein, um den Reifen zu drehen. Die übrigen Greifelemente 20 sind als frei drehbare Rollen ausgebildet, auf denen die Reifenflanken 26 aufliegen und abrollen.

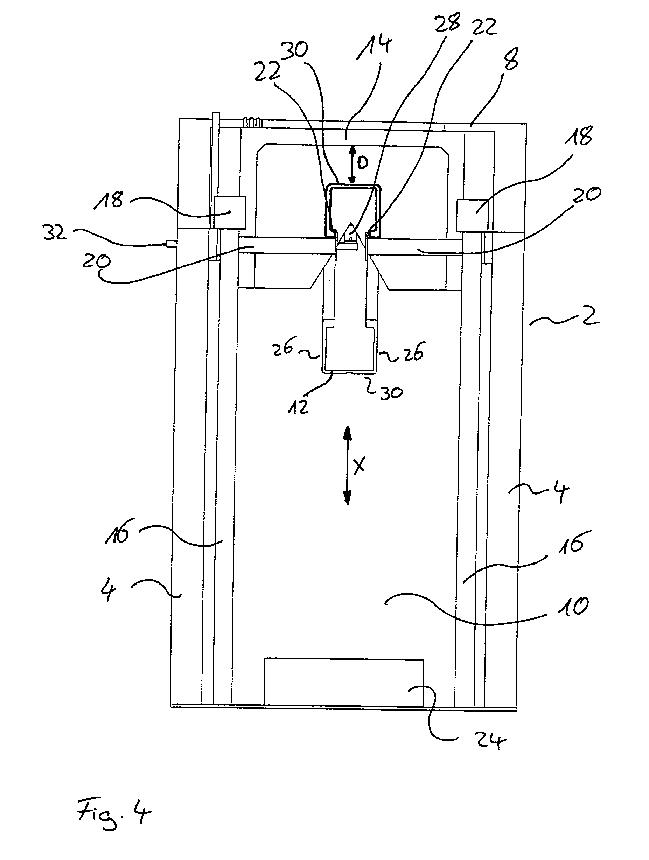

Das beschriebene Positionierverfahren zur Anordnung des Reifens 12 in der Prüfposition relativ zu dem Detektor 14 hat ferner den Vorteil, dass es sehr leicht ist, Reifen mit unterschiedlichen Durchmessern und Flankenhöhen relativ zu dem Detektor 14 zu positionieren. Der Detektor 14 muss überhaupt nicht positioniert werden, die Positionierung des Reifens 12 erfolgt in einem Arbeitsgang beim Anheben des Reifens 12 in die Prüfposition. Je nach Flankenhöhe des zu prüfenden Reifens 12 wird der Reifen unterschiedlich weit in vertikaler Richtung X bewegt, so dass die Lauffläche 30 in der in Figuren 3 und 4 gezeigten Prüfposition vorzugsweise immer einen definierten Abstand D zu dem Detektor 14 hat. Auch wenn hier ein u-förmiger Detektor mit drei Detektorzeilen gezeigt ist, kann auch ein linearer Detektor mit nur einer Detektorzeile verwendet werden, diese muss dann, um beide Reifenflanken 26 und die Lauffläche 30 zu prüfen, so verschwenkt werden, dass die Detektorzeile sich einmal parallel zu der einen Reifenflanke 26, dann parallel zu der Lauffläche 30 und anschließend parallel zu der zweiten Reifenflanke 26 erstreckt. Die Röntgenstrahlquelle 28 ist in bekannter Weise vorzugsweise als Rundstrahlquelle ausgebildet, so dass beide Reifenflanken 26 und die Lauffläche 30 gleichzeitig gleichmäßig durchleuchtet werden.

Fig. 5 zeigt den Reifen 12 in einer schematischen Detailansicht in seiner Prüfposition. Der Reifen ruht auf den Greifelementen 20, wobei in Fig. 5 die Greifelemente 20 nicht in der gespreizten Position gezeigt sind, so dass die Anschlagschulter 22 besser erkennbar ist. Zum Spreizen der Reifenflanken 26 werden die Greifelemente 20 linear nach außen bewegt, so dass die Anlageschultern 22 an der Innenseite der Reifenflanke 26 zur Anlage kommen und die Reifenflanken 26 auseinanderspreizen können. In Fig. 5 ist ferner erkennbar, dass die Zustelleinrichtung 32 für die Röntgenstrahlquelle 28, welche im Inneren des Reifens 12 angeordnet und daher in Fig. 5 nicht erkennbar ist, zwischen den zwei Greifelementen 20 angeordnet ist.

### Bezugszeichenliste

- 2: - Traggestell
- 4: - Pfosten
- 6: - Querträger
- 8: - Verbindungsbrücke
- 10: - Aufnahmeraum
- 12: - Reifen
- 14: - Detektor
- 16: - Linearführung
- 18: - Trägerelement
- 20: - Greifelemente
- 22: - Anlageschulter
- 24: - Transporteinrichtung
- 26: - Reifenflanke
- 28: - Röntgenstrahlquelle
- 30: - Lauffläche
- 32: - Zustelleinrichtung

- X: - vertikale Richtung
- Y: - Drehachse des Reifens 12

## Patentansprüche

1. Röntgenprüfverfahren für Reifen (12) mit folgenden Schritten zum Positionieren eines zu prüfenden Reifens (12):
Greifen eines vertikal stehenden Reifens (12) von zwei entgegengesetzten Seiten am Innenumfang des Reifens (12),
Bewegen des Reifens (12) vertikal nach oben zu einer oberhalb des Reifens (12) angeordneten Detektoreinrichtung (14), bis die Lauffläche (30) des Reifens (12) einen vorbestimmten vertikalen Abstand (D) zu der Detektoreinrichtung (14) erreicht hat.

2. Röntgenprüfverfahren nach Anspruch 1, bei welchem, nachdem der Reifen (12) den vorbestimmten Abstand (D) der Lauffläche (30) zu der Detektoreinrichtung (14) erreicht hat, eine Röntgenstrahlquelle (28) von einer Seite des Reifens (12) in horizontaler Richtung in das Innere des Reifens (12) bewegt wird.

3. Röntgenprüfverfahren nach Anspruch 1 oder 2, bei welchem die Röntgenstrahlquelle (28), nachdem sie in horizontaler Richtung in das Innere des Reifens (12) bewegt worden ist, in vertikaler Richtung in eine Position mit einem vorbestimmten vertikalen Abstand zu der Detektoreinrichtung (14) bewegt wird.

4. Röntgenprüfverfahren nach einem der vorangehenden Ansprüche, bei welchem der Reifen (12) zumindest von einer Seite mit zwei horizontal und im Wesentlichen in einer Richtung parallel zu einer Flanke des Reifens voneinander beabstandeten Greifelementen (20) ergriffen wird.

5. Röntgenprüfverfahren nach Anspruch 4, bei welchem die Röntgenstrahlquelle (28) in horizontaler Richtung zwischen den zwei Greifelementen (20) angeordnet ist.

6. Röntgenprüfverfahren nach Anspruch 4 oder 5, bei welchem der Reifen (12) während der Röntgenprüfung durch zumindest eines der Greifelemente (20) in Rotation versetzt wird.

7. Röntgenprüfvorrichtung für Reifen (12) mit
einer oberhalb einer Zuführebene für die zu prüfenden Reifen (12) angeordneten Detektoreinrichtung (14),
einer Lifteinrichtung (16, 18) zum Anheben des Reifens (12),
und zwei einander gegenüberliegenden Greifeinrichtungen (20), welche derart an der Lifteinrichtung (16, 18) angeordnet sind, dass sie den Reifen (12) von zwei entgegengesetzten Seiten an dessen Innenumfang ergreifen können.

8. Röntgenprüfvorrichtung nach Anspruch 7, bei welcher eine Röntgenstrahlquelle (28) vorgesehen ist, welche in horizontaler Richtung in das Innere eines zu prüfenden Reifens (12) verfahrbar ist.

9. Röntgenprüfvorrichtung nach Anspruch 7 oder 8, bei welcher die Detektoreinrichtung (14) an einer festen vertikalen Position angeordnet ist.

10. Röntgenprüfvorrichtung nach einem der Ansprüche 7 bis 9, bei welcher die Röntgenstrahlquelle (28) an einer Zustelleinrichtung (32) befestigt ist, welche relativ zu der Detektoreinrichtung (14) ortsfest angeordnet ist.

11. Röntgenprüfvorrichtung nach Anspruch 10, bei welcher die Röntgenstrahlquelle (28) über die Zustelleinrichtung (32) in horizontaler und vorzugsweise auch in vertikaler Richtung zustellbar ist.

12. Röntgenprüfvorrichtung nach einem der Ansprüche 7 bis 11, bei welcher zumindest eine der Greifeinrichtungen zwei horizontal und im Wesentlichen in einer Richtung parallel zu einer Flanke (26) eines zu greifenden Reifens (12) voneinander beabstandete Greifelemente (20) aufweist.

13. Röntgenprüfvorrichtung nach einem der Ansprüche 7 bis 12, bei welcher jede der Greifeinrichtungen (20) an einem vertikal bewegbaren Tragelement (18) angeordnet ist, wobei beide Tragelemente (18) relativ zu der Detektoreinrichtung (14) synchron bewegbar sind.

14. Röntgenprüfvorrichtung nach einem der Ansprüche 7 bis 13, bei welcher die beiden Greifeinrichtungen (20) zum Greifen des Reifens (12) horizontal aufeinander zu und voneinander wegbewegbar sind.

15. Röntgenprüfvorrichtung nach einem der Ansprüche 7 bis 14, bei welcher zumindest eine Greifeinrichtung (20) oder zumindest ein Greifelement (20) eine antreibbare Rolle zur Rotation eines von den Greifeinrichtungen (20) gegriffenen Reifens (12) aufweist.
